# EUROPÄISCHE PATENTANMELDUNG

(11) **EP 4 617 042 A1**
(43) Veröffentlichungstag der Anmeldung: **17.09.2025**
(21) Anmeldenummer: 25162487.0
(22) Anmeldetag: 10.03.2025
(51) Int. Cl.: B29C 55/02

(54) **RECKANLAGE SOWIE FOLIENHERSTELLUNGSANLAGE**

(30) Priorität: 11.03.2024 DE 102024106937
(71) Anmelder: Brückner Maschinenbau GmbH, 83313 Siegsdorf (DE)
(72) Erfinder: Wettemann, Anton, 83377 Vachendorf (DE)
(74) Vertreter: Flach Bauer & Partner Patentanwälte mbB

(57) **Zusammenfassung**

Eine Reckanlage (15) zum Recken einer Folie, insbesondere eine Quer- und/oder Simultan-Reckanlage, hat einen Ofen (26) und ein Wärmerückgewinnungssystem (28). Das Wärmerückgewinnungssystem (28) hat einen Wärmetauscher (34) mit einem Abluftkanal (46) für Abluft aus dem Ofen (26), einem Zuluftkanal (44) für Zuluft zum Ofen (26), einer Vielzahl an Wärmeleitern (48), einer Vielzahl an Wärmekollektoren (50) und einen Kondensatsammler (52). Der Abluftkanal (46) ist zum Kondensatsammler (52) hin geöffnet, wobei die Wärmekollektoren (50) im Abluftkanal (46) mit einem Zwischenraum (68) zwischen benachbarten Wärmekollektoren (50) angeordnet sind und die Wärmeleiter (48) mit den Wärmekollektoren (50) thermisch verbunden sind, wobei die Zwischenräume (68) zum Kondensatsammler (52) hin geöffnet sind.

Ferner ist eine Folienherstellungsanlage (10) gezeigt.

## Beschreibung

Die Erfindung betrifft eine Reckanlage sowie eine Folienherstellungsanlage.

Folienherstellungsanlagen sind bekannt und umfassen üblicherweise wenigstens eine Reckanlage.

Die Herstellung von Kunststofffolie in solchen Systemen ist sehr energieintensiv, da in Öfen der Reckanlagen hohe Temperaturen benötigt werden.

Gleichzeitig muss den Öfen kontinuierlich Frischluft zugeführt und im Gegenzug Abluft abgesaugt werden, um die Verschmutzung des Ofens zu reduzieren. Verschmutzungen entstehen unter anderem dadurch, dass aus den Folien beim Durchlaufen des Ofens unterschiedlich geartete Stoffe, im Wesentlichen Kohlenwasserstoffverbindungen austreten. Der Luftaustausch ist dabei mit einem hohen Heizenergieaufwand verbunden, da die angesaugte Frischluft auf Ofentemperatur aufgeheizt werden muss.

Daher ist es bekannt, Folienherstellungsanlagen mit einem Wärmetauscher zur Wärmerückgewinnung vorzusehen. Problematisch bei solchen Systemen ist jedoch, dass die in der Ofenluft enthaltenen Stoffe beim Abkühlen am Wärmetauscher auskondensieren und sich an der abluftseitigen Fläche des Wärmetauschers niederschlagen. Hierdurch wird der Wirkungsgrad des Wärmetauschers verschlechtert, sodass der Wärmetauscher aufwändig gereinigt werden muss.

Es ist daher Aufgabe der Erfindung, eine Reckanlage und eine Folienherstellungsanlage bereitzustellen, die besonders energieeffizient und zugleich wartungsarm sind.

Die Aufgabe wird gelöst durch eine Reckanlage zum Recken einer Folie, insbesondere eine Quer- und/oder Simultan-Reckanlage, mit einem Ofen und einem Wärmerückgewinnungssystem. Das Wärmerückgewinnungssystem weist einen Kondensatsammler und einen Wärmetauscher mit einem Abluftkanal für Abluft aus dem Ofen, einem Zuluftkanal für Zuluft zum Ofen, einer Vielzahl an Wärmeleitern und einer Vielzahl an Wärmekollektoren auf. Der Zuluftkanal und der Abluftkanal sind durch eine Trennwand fluidisch voneinander getrennt, und die Wärmeleiter erstrecken sich vom Abluftkanal durch die Trennwand in den Zuluftkanal, wobei der Abluftkanal zum Kondensatsammler hin geöffnet ist. Die Wärmekollektoren sind im Abluftkanal mit einem Zwischenraum zwischen benachbarten Wärmekollektoren angeordnet und die Wärmeleiter sind mit den Wärmekollektoren thermisch verbunden, wobei die Zwischenräume zum Kondensatsammler hin geöffnet sind.

Durch die Wärmekollektoren wird ein hoher Wirkungsgrad des Wärmetauschers erreicht. Gleichzeitig wird sich niederschlagendes Kondensat durch den Kondensatsammler und dadurch, dass Zwischenräume zum Kondensatsammler hin geöffnet sind, zuverlässig abtransportiert. Folglich bleibt der hohe Wirkungsgrad auch ohne Reinigung und somit Wartungsaufwand permanent hoch.

Beispielsweise ist jeder Wärmekollektor mit wenigstens einem, mehreren oder jedem der Wärmeleiter thermisch verbunden.

Die Zuluft ist insbesondere Frischluft aus der Umgebung der Reckanlage.

In einer Ausgestaltung sind mehrere Wärmeemitter im Zuluftkanal vorgesehen, die wie die Wärmekollektoren ausgestaltet sind.

In einer Ausführungsform definiert der Abluftkanal eine Strömungsbahn für die Luftströmung der Abluft, wobei der Kondensatsammler außerhalb der Strömungsbahn angeordnet ist. Auf diese Weise wird verhindert, dass das Kondensat durch die Luftströmung aus dem Wärmetauscher getragen wird.

Für einen weiter verbesserten Austrag des Kondensats aus den Zwischenräumen kann der Kondensatsammler zumindest teilweise unterhalb des Abluftkanals angeordnet sein, insbesondere unterhalb der Strömungsbahn.

Der Begriff "unterhalb" ist im Rahmen dieser Offenbarung in Bezug auf die vorgesehene Montageposition des Wärmerückgewinnungssystems zu verstehen. Insbesondere soll "unterhalb" direkt vertikal unterhalb bedeuten und nicht zusätzlich horizontal versetzt.

In einer Ausführungsform weist der Abluftkanal eine Kondensatablauföffnung auf, die Teil des Kondensatsammlers ist, insbesondere wobei der Abluftkanal einen Boden aufweist und die wenigstens eine Kondensatablauföffnung im Boden vorgesehen ist. Auf diese Weise kann das gesammelte Kondensat zuverlässig aus dem Abluftkanal entfernt werden.

Beispielsweise ist der Boden eben oder als Rinne ausgeführt.

In einer Ausgestaltung weist der Kondensatsammler eine Wanne auf, insbesondere wobei die Wanne zur Leerung aus dem Kondensatsammler entnehmbar ist. Dadurch lässt sich das Kondensat zuverlässig sammeln und insbesondere einfach entsorgen.

Zur weiteren Verringerung des Wartungsaufwands kann das Wärmerückgewinnungssystem einen Kondensatabfluss aufweisen und der Kondensatsammler ist fluidisch mit dem Kondensatabfluss verbunden, insbesondere mittels eines Siphons.

Zur weiteren Verbesserung des Wirkungsgrads des Wärmetauschers können die Wärmekollektoren plattenförmig ausgeführt sein und die Wärmeleiter können sich durch die Wärmekollektoren erstrecken.

Beispielsweise erstreckt sich jeder Wärmeleiter durch wenigstens einen, mehrere oder alle Wärmekollektoren, insbesondere senkrecht.

In einer Ausgestaltung verlaufen die Wärmekollektoren parallel zueinander und/oder parallel zur Trennwand, um den Strömungswiderstand zu verringern.

Um etwaiges Kondensat an den Kollektoren zuverlässig abzuleiten, können die Wärmeleiter horizontal verlaufen oder in einem Winkel zwischen 0° und 10° zur horizontalen Richtung angeordnet sein, insbesondere wobei der Abschnitt des Wärmeleiters im Abluftkanal niedriger liegt als derjenige Abschnitt im Zuluftkanal.

Der Winkel beträgt beispielsweise 4°.

In einer Ausgestaltung weisen die Zwischenräume eine Luftströmungsrichtung und eine Kondensatflussrichtung auf, wobei die Luftströmungsrichtung und die Kondensatflussrichtung parallel zueinander verlaufen, insbesondere wobei die Luftströmungsrichtung und die Kondensatflussrichtung vertikal verlaufen oder in einem Winkel zwischen 0° und 10° zur Vertikalen orientiert sind. Auf diese Weise wird der Austrag des Kondensats aus den Zwischenräumen durch die Luftströmung unterstützt.

Kondensatflussrichtung ist beispielsweise diejenige Richtung, in die Kondensat, das sich an den Wärmekollektoren bildet, ungehindert - abgesehen von den Wärmeleitern - fließen kann. Die Kondensatflussrichtung verläuft insbesondere nach unten.

Die Wärmeleiter können sich im Bereich der Wärmekollektoren senkrecht zur Luftströmungsrichtung und/oder zur Kondensatflussrichtung erstrecken.

In einer Ausführungsform weisen die Zwischenräume eine Luftströmungsrichtung und eine Kondensatflussrichtung auf, wobei die Luftströmungsrichtung und die Kondensatflussrichtung senkrecht zueinander verlaufen, insbesondere wobei die Luftströmungsrichtung horizontal verläuft und/oder die Kondensatflussrichtung vertikal verläuft oder in einem Winkel zwischen 0° und 10° zur Vertikalen orientiert ist. Auf diese Weise wird die Menge an Kondensat, die durch die Luftströmung in die Umgebung transportiert wird, weiter verringert.

Für eine weitere Steigerung der Effizienz können die Wärmeleiter Wärmerohre, insbesondere Heat Pipes, sein.

In einer Ausgestaltung weist der Ofen eine Zuluftzufuhr auf, die mit dem Zuluftkanal des Wärmetauschers fluidisch verbunden ist, und/oder der Ofen weist eine Abluftabfuhr auf, die mit dem Abluftkanal des Wärmetauschers fluidisch verbunden ist, sodass eine direkte und effiziente Anbindung des Wärmerückgewinnungssystems an den Ofen erreicht wird.

Die fluidische Verbindung erfolgt beispielsweise mittels Rohrleitungen.

Zur Temperierung der Zuluft kann das Wärmerückgewinnungssystem ein Heizregister aufweisen. Beispielsweise ist das Heizregister fluidisch zwischen dem Zuluftkanal des Wärmetauschers und der Zuluftzufuhr des Ofens angeordnet.

Der Zuluftventilator ist zum Beispiel zwischen dem Zuluftkanal des Wärmetauschers und/oder dem Heizregister und der Zuluftzufuhr des Ofens angeordnet. Der Abluftventilator ist zum Beispiel stromabwärts des Abluftkanals des Wärmetauschers angeordnet.

Die Aufgabe wird ferner gelöst durch eine Folienherstellungsanlage mit wenigstens einer Reckanlage wie zuvor beschrieben sowie einer weiteren Reckanlage, einer Extrusionsanlage, einer Gießwalzenanlage, einer Zugrollenanlage und/oder einer Wickleranlage.

Die zur Reckanlage beschriebenen Merkmale und Vorteile gelten gleichermaßen für die Folienherstellungsanlage und umgekehrt.

Weitere Merkmale und Vorteile der Erfindung ergeben sich aus der nachfolgenden Beschreibung sowie aus den beigefügten Zeichnungen, auf die Bezug genommen wird. In den Zeichnungen zeigen:
- Fig. 1: eine Folienherstellungsanlage gemäß einer Ausführungsform der Erfindung mit wenigstens einer Reckanlage gemäß einer Ausführungsform der Erfindung in schematischer, perspektivischer Ansicht,
- Fig. 2: eine vergrößerte Darstellung eines Wärmerückgewinnungssystems der Reckanlage gemäß Figur 1,
- Figs. 3,4: schematische Schnittansichten durch den Wärmetauscher des Wärmerückgewinnungssystems gemäß Figur 2,
- Fig. 5: eine perspektivische Ansicht eines Wärmetauschers einer Reckanlage gemäß einer zweiten Ausführungsform der Erfindung, und
- Fig. 6: eine Schnittansicht durch den Wärmetauscher eines Wärmerückgewinnungssystems einer Reckanlage gemäß einer dritten Ausführungsform der Erfindung.

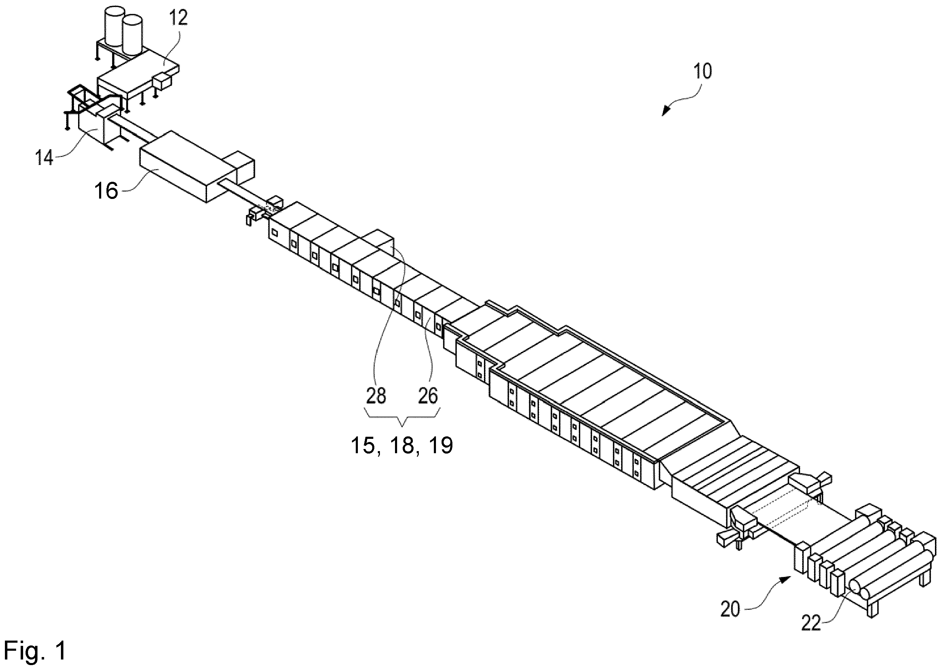

In Figur 1 ist äußerst schematisch eine Folienherstellungsanlage 10 gezeigt, die mehrere verschiedene Anlagen und Vorrichtungen umfasst.

Im gezeigten Beispiel weist die Folienherstellungsanlage 10 eine Extrusionsanlage 12, eine Gießwalzenanlage 14, zumindest eine Reckanlage 15 - wie eine Längsreckanlage 16 (MDO, "Machine Direction Orienter") oder eine Querreckanlage 18 (TDO, "Transverse Direction Orienter") - eine Zugrollenanlage 20 sowie eine Wickleranlage 22 auf.

Die hergestellte Folie ist beispielsweise eine biaxial verstreckte Folie, wie Polypropylenfolie (BO-PP), PP-Kondensatorfolie (BOPP-C), Polyethylenterephthalatfolie (BO-PET), Polyamidfolie (BOPA), Polyethylenfolie (BO-PE) oder Polyactidfolie (BO-PLA).

Zur Herstellung der Kunststofffolie wird mittels der Extrusionsanlage 12 ein Film auf der Kühlwalze einer Gießwalzenanlage 14 erzeugt. Hierzu erzeugt die Extrusionsanlage 12 aus Ausgangsprodukten, wie Granulaten, eine Schmelze, die auf die Kühlwalze aufgetragen wird, wodurch der Film erzeugt wird.

Dieser Film wird von der Gießwalzenanlage 14 zur Längsreckanlage 16 gefördert. In der Längsreckanlage 16 wird der Film in Längsrichtung gereckt, um eine Folie zu erhalten.

In der Längsreckanlage 16 läuft der Film über eine Vielzahl an Rollen, die beheizt sind, um den Film auf die gewünschte Temperatur zu bringen, um ihn verstrecken zu können.

Zwischen mindestens zwei der in der Längsreckanlage 16 vorhandenen Rollen findet die Reckung in Längsrichtung, d. h. in Abzugsrichtung, statt, sodass aus dem Film eine Folie wird.

Die erhaltene Folie wird von der Längsreckanlage 16 zur Querreckanlage 18 gefördert und in der Querreckanlage 18 in Querrichtung gereckt.

Die Querreckanlage 18 hat entlang der Abzugsrichtung der Folienherstellungsanlage 10 einen Ofen 26 mit verschiedenen Zonen zur Behandlung der Folie.

In der ersten Zone, auch Vorheizzone genannt, wird die Folie erwärmt. In der anschließenden zweiten Zone ("Reckzone") wird die Folie in Querrichtung gereckt, sodass sie zum Ende der zweiten Zone eine größere Breite und geringere Dicke aufweist als zu Beginn.

Nach erfolgter Reckung durchläuft die Folie dann die dritte und weitere Zonen ("Wärmebehandlungszone", "Weiterheizzone" und/oder "Annealingzone" genannt), bei der beispielsweise eine Relaxierung der Folie bei hohen Temperaturen erfolgen kann.

Anschließend verläuft die Folie durch eine weitere Zone ("Kühlzone"), wobei die Folie in der letzten Zone abgekühlt wird.

Eine weitere Zone wird Neutralzone genannt und dient zur Trennung von Zonen. Die Neutralzone ist beispielsweise ein leerer Raum ohne Belüftung.

Die Zonen der Querreckanlagen 18 können auch anders aufgeteilt sein und/oder in ihrer Länge anders ausgeführt sein. Zum Beispiel können weniger oder kürzere Neutralzonen vorgesehen sein oder die Neutralzonen können an anderen Stellen, auch zusätzlich, angeordnet sein. Auch Änderungen an den übrigen Zonen sind denkbar.

Nach der Querreckanlage 18 verläuft die nun biaxial gereckte Folie durch die Zugrollenanlage 20 und wird mittels der Wickleranlage 22 aufgewickelt.

Denkbar ist auch, dass die Folienherstellungsanlage 10 auf andere Weise ausgebildet ist, beispielsweise als Reckanlage 15 alternativ oder zusätzlich zur Längsreckanlage 16 und/oder zur Querreckanlage 18 eine Simultanreckanlage 19 mit einem Ofen 26 aufweist.

Im Rahmen dieser Erfindung wird nun allgemein eine Reckanlage 15 beschrieben, die sowohl ein Quer- oder Simultanreckanlage oder eine Kombination hiervon sein kann.

Die Reckanlage 15, genauer gesagt ihr Ofen 26 benötigt während des Betriebs kontinuierlich Zuluft, insbesondere Frischluft, um im Gegenzug verunreinigte Abluft absaugen zu können.

Um die Abwärme aus der Abluft nutzen zu können, weist die Reckanlage 15 ein Wärmerückgewinnungssystem 28 auf.

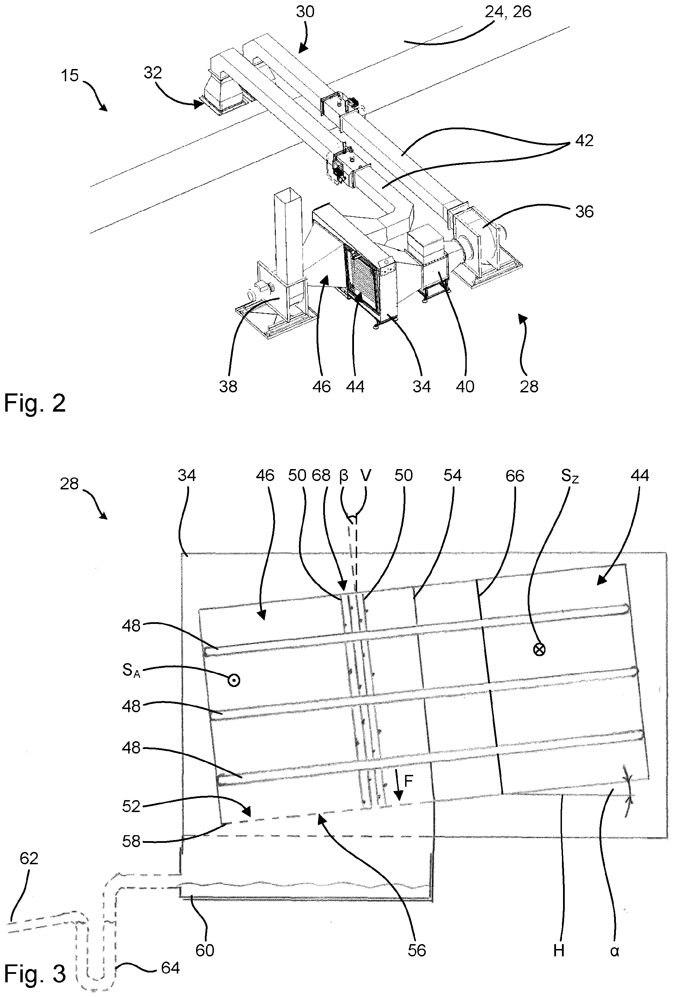

Eines der Wärmerückgewinnungssysteme 28, von dem eine Reckanlage 15 auch mehrere aufweisen kann, ist in Figur 2 vergrößert dargestellt.

Zu erkennen ist, dass der Ofen 26 eine Zuluftzufuhr 30 und eine Abluftabfuhr 32 aufweist, die beide fluidisch mit dem Wärmerückgewinnungssystem 28 in Verbindung stehen.

Das Wärmerückgewinnungssystem 28 weist einen Wärmetauscher 34, einen Zuluftventilator 36, einen Abluftventilator 38, ein Heizregister 40, Rohrleitungen 42 sowie einen Kondensatsammler 52 auf.

Der Wärmetauscher 34 hat einen Zuluftkanal 44 sowie einen Abluftkanal 46, die fluidisch getrennt voneinander mittels der Rohrleitungen 42 mit der Zuluftzufuhr 30 bzw. der Abluftabfuhr 32 des Ofens 26 in fluidischer Verbindung stehen.

Der Zuluftkanal 44 des Wärmetauschers 34 ist stromaufwärts in Bezug auf die Zuluftströmung zur Umgebung des Ofens 26 und des Wärmerückgewinnungssystems 28 hin geöffnet. Optional ist ein Luftfilter auf dieser Seite vorgesehen.

Stromabwärts ist der Zuluftkanal 44 des Wärmetauschers 34 fluidisch mit dem Heizregister 40 und dem Zuluftventilator 36 verbunden, die somit zwischen dem Zuluftkanal 44 und der Zuluftzufuhr 30 angeordnet sind. Beispielsweise ist der Zuluftventilator 36 stromabwärts des Heizregisters 40 angeordnet, sodass das Heizregister 40 zwischen dem Wärmetauscher 34 und dem Zuluftventilator 36 angeordnet ist.

Der Abluftventilator 38 kann, in Bezug auf die Abluftströmung, stromabwärts des Abluftkanals 46 des Wärmetauschers 34 angeordnet sein, sodass der Wärmetauscher 34 fluidisch zwischen dem Abluftventilator 38 und der Abluftabfuhr 32 des Ofens 26 angeordnet ist.

Denkbar ist auch, dass der Abluftventilator 38 zwischen der Abluftabfuhr 32 und dem Wärmetauscher 34 angeordnet ist.

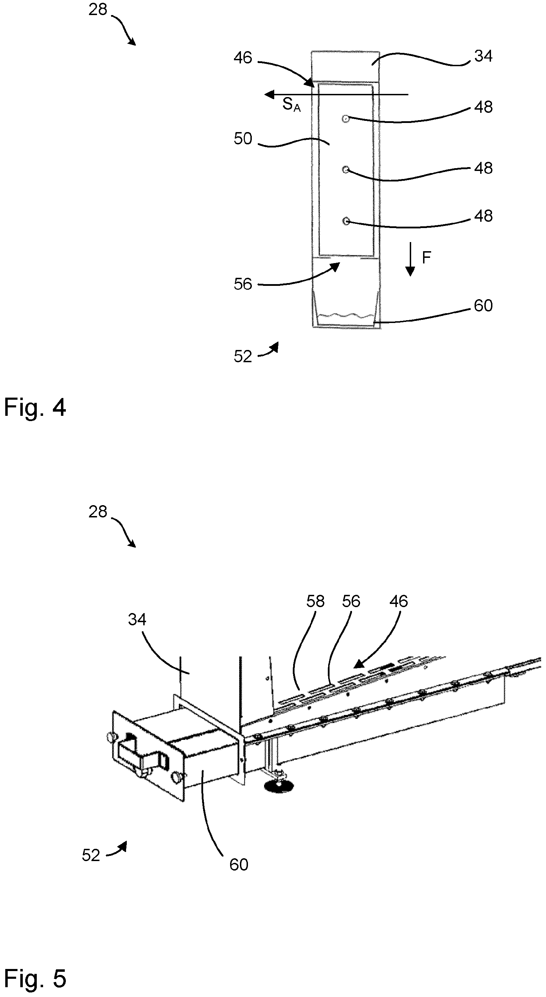

In den Figuren 3 und 4 ist der Wärmetauscher 34 des Wärmerückgewinnungssystems 28 in Längsschnitts bzw. im Querschnitt (jeweils orthogonal zur Strömungsrichtung) vereinfacht dargestellt.

Der Wärmetauscher 34 weist neben dem Zuluftkanal 44 und dem Abluftkanal 46 eine Vielzahl an Wärmeleitern 48, eine Vielzahl an Wärmekollektoren 50 sowie eine Trennwand 54 auf.

In den Figuren sind aus Gründen der Übersichtlichkeit nur wenige Wärmeleiter 48 und wenige Wärmekollektoren 50 dargestellt, um das grundlegende Prinzip zu erläutern. Es ist denkbar, dass deutlich mehr Wärmeleiter 48 und/oder Wärmekollektoren 50 vorgesehen sind.

In den Figuren 3 und 4 ist der Wärmetauscher 34 in der vorgesehenen Montageposition dargestellt, sodass in den Figuren unten dargestellte Teile in Bezug zur Schwerkraft auch unten angeordnet sind.

Im Wärmetauscher 34 sind der Zuluftkanal 44 und der Abluftkanal 46 direkt nebeneinander angeordnet. Der Zuluftkanal 44 ist durch die Trennwand 54 vom Abluftkanal 46 fluidisch getrennt.

Der Abluftkanal 46 definiert eine Strömungsbahn für die Luftströmung S_{A} der Abluft. Die Luftströmungsrichtung S_{A} der Abluft im Abluftkanal 46 und die Luftströmungsrichtung Sz der Zuluft im Zuluftkanal 44 verlaufen antiparallel zueinander. Denkbar ist auch ein paralleler Verlauf der Luftströmungsrichtung S_{A} der Abluft im Abluftkanal 46 und der Luftströmungsrichtung Sz der Zuluft im Zuluftkanal 44.

Im ersten Ausführungsbeispiel verlaufen die Luftströmungsrichtung S_{A} im Abluftkanal 46 und die Luftströmungsrichtung Sz im Zuluftkanal 44 horizontal.

Unterhalb des Abluftkanals 46 ist der Kondensatsammler 52 angeordnet, und der Abluftkanal 46 ist zum Kondensatsammler 52 hin geöffnet. Der Kondensatsammler 52 ist außerhalb, insbesondere unterhalb der Strömungsbahn angeordnet.

Der Kondensatsammler 52 kann zumindest teilweise, insbesondere vollständig durch Kondensatablauföffnungen 56 realisiert sein, die im Boden 58 des Abluftkanals 46 vorgesehen sind. Der Boden 58 kann dabei als Rinne ausgeführt sein.

Unterhalb bedeutet diesbezüglich insbesondere, dass zumindest Teile des Kondensatsammlers 52 oder der gesamte Kondensatsammler 52 direkt vertikal unterhalb von zumindest Teilen des Abluftkanals 46 oder dem gesamten Abluftkanal 46 angeordnet ist, d.h. der Schwerkraft folgend.

Der Kondensatsammler 52 weist zudem eine Wanne 60 auf, die beispielsweise unterhalb der Kondensatablauföffnungen 56 angeordnet ist. Zur Entleerung der Wanne 60 kann das Wärmerückgewinnungssystem 28, wie in Figur 3 gestrichelt dargestellt, einen Kondensatabfluss 62 aufweisen. Der Kondensatabfluss 62 ist, beispielsweise mittels eines Siphons 64 mit dem Kondensatsammler 52, in Figur 3 mit der Wanne 60, fluidisch verbunden.

Die Wärmeleiter 48 sind beispielsweise als Wärmerohre, insbesondere als Heat Pipes ausgeführt.

Die Wärmeleiter 48 sind jeweils teilweise im Zuluftkanal 44 und teilweise im Abluftkanal 46 angeordnet. Sie erstreckt sich somit vom Abluftkanal 46 durch die Trennwand 54 in den Zuluftkanal 44. In Bezug zu den Luftströmungsrichtungen S_{A} und Sz verlaufen die Wärmeleiter 48 senkrecht.

Die Wärmeleiter 48 können in horizontaler Richtung H verlaufen oder, wie in Figur 3 dargestellt, in einem Winkel α zur horizontalen Richtung H von 0° bis 10°. Der Winkel ist beispielsweise 4°. Dabei steigen die Wärmeleiter 48 zum Zuluftkanal 44 hin an, sodass der Abschnitt jedes Wärmeleiters 48 im Abluftkanal 46 niedriger liegt als der Abschnitt des gleichen Wärmeleiters 48 im Zuluftkanal 44.

Die Wärmekollektoren 50 sind im Abluftkanal 46 angeordnet und im gezeigten Ausführungsbeispiel plattenförmig ausgeführt. Sie sind parallel zueinander angeordnet und verlaufen zum Beispiel parallel zur Trennwand 54.

Die Wärmekollektoren 50 erstrecken sich in Luftströmungsrichtung S_{A} sowie in vertikaler Richtung V oder in einem Winkel β zwischen 0° und 10° zur vertikalen Richtung V.

Die Wärmekollektoren 50 erstreckt sich senkrecht zu den Wärmeleitern 48, wobei sie mit einem, mehreren oder allen Wärmeleitern 48 thermisch verbunden sind. Beispielsweise erstreckt bzw. erstrecken sich ein, mehrere, oder alle Wärmeleiter 48 durch einen der Wärmekollektoren 50 und sind mit diesem thermisch verbunden.

Ebenso ist jeder der Wärmeleiter 48 mit einem, mehreren oder allen Wärmekollektoren 50 thermisch verbunden.

In gleicher Weise wie die Wärmekollektoren 50 ist eine Vielzahl an Wärmeemittern 66 im Zuluftkanal 44 vorgesehen, wobei aus Gründen der Übersichtlichkeit lediglich einer der Wärmeemitter 66 in Figur 3 dargestellt ist.

Die Wärmekollektoren 50 sind parallel zueinander angeordnet, sodass jeweils ein Zwischenraum 68 zwischen zwei benachbarten Wärmekollektoren 50 gebildet ist. Die Zwischenräume 68 verlaufen somit in die gleichen Richtungen wie die Wärmekollektoren 50.

Die Zwischenräume 68 sind aufgrund der Anordnung der Wärmekollektoren in der Luftströmungsrichtung S_{A} geöffnet. Den Zwischenräumen 68 kann daher auch die Luftströmungsrichtung S_{A} zugeordnet werden, in der die Abluft in den Zwischenräumen 68 strömt.

Ebenfalls sind die Zwischenräume 68 zum Kondensatsammler 52 hin, d.h. nach unten hin geöffnet.

Die Zwischenräume 68 weisen eine Kondensatflussrichtung F auf, die diejenige Richtung beschreibt, in die Kondensat abläuft, das sich aus der Abluft an den Wärmekollektoren 50 niederschlägt. Die Kondensatflussrichtung F verläuft beispielsweise nach unten bzw. hat eine überwiegende nach unten, d.h. in Richtung der Schwerkraft, gerichtete Komponente.

Auch die Zwischenräume 68 erstrecken sich somit wie die Wärmekollektoren 50 in vertikaler Richtung V oder im Winkel β zur vertikalen Richtung V. Im Beispiel der Figur 3 erstrecken sich die Wärmeleiter 48 senkrecht zur Kondensatflussrichtung F.

Im Beispiel gemäß Figur 3 verläuft die Kondensatflussrichtung F senkrecht zur Luftströmungsrichtung SA.

Während des Betriebs der Folienherstellungsanlage 10 bzw. der Reckanlage 15 und damit auch des Wärmerückgewinnungssystems 28 wird mittels des Abluftventilators 38 heiße Luft aus dem Ofen 26 durch den Abluftkanal 46 gefördert.

Diese Abluft enthält beispielsweise Kohlenwasserstoffverbindungen, die bei Abkühlung schnell kondensieren.

Die heiße Abluft strömt somit in Luftströmungsrichtung S_{A} durch den Abluftkanal 46 des Wärmetauschers 34 und kommt dort mit den Wärmekollektoren 50 und den Wärmeleitern 48 in Kontakt. Anschließend wird die Abluft durch den Abluftventilator 38 in die Umgebung der Reckanlage 15 transportiert.

Im Abluftkanal 46 überträgt die Abluft Wärme an die im Vergleich zur Abluft kälteren Wärmekollektoren 50 und die Wärmeleiter 48.

Diese abgegebene Wärme wird durch die Wärmekollektoren 50 und schließlich die Wärmeleiter 48 in den Zuluftkanal 44 transportiert.

Durch den Zuluftkanal 44 strömt Zuluft, insbesondere Frischluft, die mittels des Zuluftventilators 36 gefördert wird.

Im Zuluftkanal 44 erwärmt sich die Zuluft aufgrund des Kontakts mit den im Vergleich zur Zuluft wärmeren Wärmeleitern 48 und den Wärmeemittern 66. Anschließend passiert die Zuluft das Heizregister 40 und wird dort auf die im Ofen notwendige Temperatur gebracht, bis sie schließlich durch die Zuluftzufuhr 30 in den Ofen 26 gelangt.

Im Abluftkanal 46 wird, wie beschrieben, die Abluft an den Wärmekollektoren 50 abgekühlt. Durch diese Abkühlung Kondensieren die in der Luft befindlichen Kohlenwasserstoffverbindungen und bilden ein Kondensat an den Wärmekollektoren 50 und den Wärmeleitern 48.

Aufgrund der Anordnung der Wärmekollektoren 50 und der Zwischenräume 68 kann das Kondensat ungehindert - abgesehen von den querenden Wärmeleitern 48 - nach unten abfließen, d.h. in Kondensatflussrichtung F.

Sobald das Kondensat am unteren Ende der Wärmekollektoren 50 angelangt ist, kann es von den Wärmekollektoren 50 abtropfen oder abfließen und wird vom Kondensatsammler 52 aufgefangen. Anschließend kann das Kondensat durch den Kondensatabfluss 62 entsorgt werden.

Auf diese Weise wird gewährleistet, dass kein Kondensat im Abluftkanal 46 und im speziellen in den Zwischenräumen 68 verweilt und diese verstopfen kann. Auf diese Weise bleibt ein sehr guter Wirkungsgrad des Wärmetauschers 34 gewährleistet, ohne dass aufwendige Wartungstätigkeiten notwendig sind.

Das Wärmerückgewinnungssystem 28 ist somit äußerst effizient und zugleich wartungsarm.

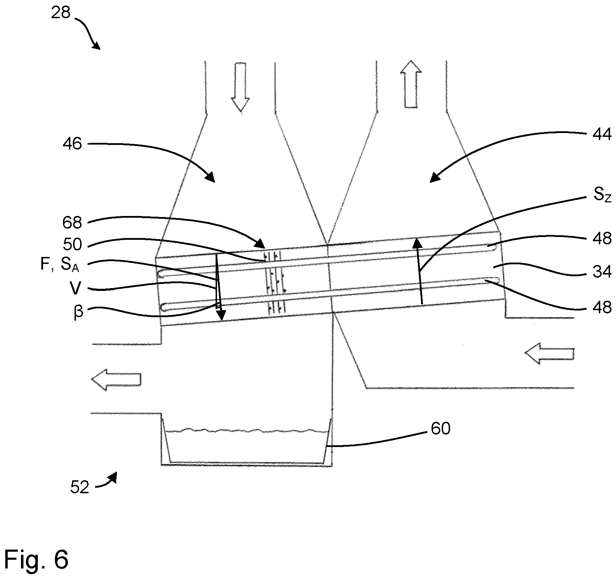

In den Figuren 5 und 6 sind weitere Ausführungsformen des Wärmerückgewinnungssystems 28 und somit der Reckanlage 15 bzw. der Folienherstellungsanlage 10 dargestellt. Diese entsprechen im Wesentlichen der ersten Ausführungsform, sodass im Folgenden lediglich auf die Unterschiede eingegangen wird sowie gleiche und funktionsgleiche Teile mit denselben Bezugszeichen versehen sind.

Figur 5 zeigt eine perspektivische Ansicht eines Teils einer zweiten Ausführungsform eines Wärmetauschers 34.

In dieser Ausführungsform kann die Wanne 60 des Kondensatsammlers 52 entnommen werden, d.h. von unterhalb des Abluftkanals 46 entnommen werden. Auf diese Weise kann die Wanne 60 auf einfache Weise geleert werden, ohne dass ein dezidierter Kondensatabfluss 62 vorgesehen sein muss.

Gut zu erkennen sind in Figur 5 auch die Kondensatablauföffnungen 56 im Boden 58 des Abluftkanals 46.

Beispielsweise sind die Kondensatablauföffnungen 56 am stromabwärtigen Rand des Bodens 58 vorgesehen, damit die Luftströmung S_{A} auf den Boden getropftes Kondensat zu den Kondensatablauföffnungen 56 befördert.

In Figur 6 ist eine dritte Ausführungsform des Wärmerückgewinnungssystems 28 dargestellt.

In dieser Ausführungsform verlaufen die Luftströmungsrichtungen S_{A}, S_{Z} der Abluft bzw. der Zuluft nicht horizontal, sondern vertikal auf die Wärmekollektoren 50 und die Wärmeleiter 48 zu.

Unterhalb der Wärmekollektoren 50 und der Wärmeleiter 48 verläuft der Abluftkanal 46 horizontal und/oder versetzt aus dem Wärmetauscher 34 heraus, sodass auch die Strömungsbahn entsprechend die Richtung wechselt (durch Pfeile in Figur 6 angedeutet).

Unterhalb des Ortes, an dem die Strömungsbahn den Richtungswechsel vollzieht, ist der Kondensatsammler 52 angeordnet.

Der Kondensatsammler kann dabei wie zu den vorherigen Ausführungsformen beschrieben ausgebildet sein.

Die Anordnung der Wärmekollektoren 50 und der Wärmeleiter 48 im Zuluftkanal 44 entspricht der Anordnung der ersten Ausführungsform, sodass die Zwischenräume 68 weiterhin zum Kondensatsammler 52 hin geöffnet sind.

In dieser Ausführungsform verlaufen nun die Luftströmungsrichtung S_{A} und die Kondensatflussrichtung F innerhalb des Bereiches der Wärmekollektoren 50 parallel zueinander.

Die Luftströmungsrichtung S_{A} und die Kondensatflussrichtung F verlaufen in vertikaler Richtung V oder, wie dargestellt, in einem Winkel β zwischen 0° und 10° zur vertikalen Richtung V.

Der Austrag des Kondensats aus den Zwischenräumen 68 wird in dieser Ausführungsform dadurch verbessert, dass die Luftströmungsrichtung S_{A} und die Kondensatflussrichtung F parallel verlaufen.

Die unterschiedlichen Merkmale der verschiedenen Ausführungsformen sind miteinander kombinierbar, insbesondere die Verwendung einer entnehmbaren Wanne 60, eines Kondensatabflusses 62 und/oder die Lage der Kondensatablauföffnungen 56 im Boden 58.

## Patentansprüche

1. Reckanlage zum Recken einer Folie, insbesondere eine Quer- und/oder Simultan-Reckanlage, mit einem Ofen (26) und einem Wärmerückgewinnungssystem (28),
wobei das Wärmerückgewinnungssystem (28) einen Kondensatsammler (52) und einen Wärmetauscher (34) mit einem Abluftkanal (46) für Abluft aus dem Ofen (26), einem Zuluftkanal (44) für Zuluft zum Ofen (26), einer Vielzahl an Wärmeleitern (48) und einer Vielzahl an Wärmekollektoren (50) aufweist,
wobei der Zuluftkanal (44) und der Abluftkanal (46) durch eine Trennwand (54) fluidisch voneinander getrennt sind, und sich die Wärmeleiter (48) vom Abluftkanal (46) durch die Trennwand (54) in den Zuluftkanal (44) erstrecken,
wobei der Abluftkanal (46) zum Kondensatsammler (52) hin geöffnet ist,
wobei die Wärmekollektoren (50) im Abluftkanal (46) mit einem Zwischenraum (68) zwischen benachbarten Wärmekollektoren (50) angeordnet sind und die Wärmeleiter (48) mit den Wärmekollektoren (50) thermisch verbunden sind, wobei die Zwischenräume (68) zum Kondensatsammler (52) hin geöffnet sind.

2. Reckanlage nach Anspruch 1, **dadurch gekennzeichnet, dass** der Abluftkanal (46) eine Strömungsbahn für die Luftströmung (S_{A}) der Abluft definiert, wobei der Kondensatsammler (52) außerhalb der Strömungsbahn angeordnet ist.

3. Reckanlage nach Anspruch 1 oder 2, **dadurch gekennzeichnet, dass** der Kondensatsammler (52) zumindest teilweise unterhalb des Abluftkanals (46), insbesondere der Strömungsbahn, angeordnet ist.

4. Reckanlage nach einem der vorhergehenden Ansprüche, **dadurch gekennzeichnet, dass** der Abluftkanal eine Kondensatablauföffnung (56) aufweist, die Teil des Kondensatsammlers (52) ist, insbesondere wobei der Abluftkanal (46) einen Boden (58) aufweist und die wenigstens eine Kondensatablauföffnung (56) im Boden (58) vorgesehen ist.

5. Reckanlage nach einem der vorhergehenden Ansprüche, **dadurch gekennzeichnet, dass** der Kondensatsammler (52) eine Wanne (60) aufweist, insbesondere wobei die Wanne (60) zur Leerung aus dem Kondensatsammler (52) entnehmbar ist.

6. Reckanlage nach einem der vorhergehenden Ansprüche, **dadurch gekennzeichnet, dass** das Wärmerückgewinnungssystem (28) einen Kondensatabfluss (62) aufweist und der Kondensatsammler (52) fluidisch mit dem Kondensatabfluss (62) verbunden ist, insbesondere mittels eines Siphons (64).

7. Reckanlage nach einem der vorhergehenden Ansprüche, **dadurch gekennzeichnet, dass** die Wärmekollektoren (50) plattenförmig sind und die Wärmeleiter (48) sich durch die Wärmekollektoren (50) erstrecken.

8. Reckanlage nach einem der vorhergehenden Ansprüche, **dadurch gekennzeichnet, dass** die Wärmekollektoren (50) parallel zueinander und/oder parallel zur Trennwand (54) verlaufen.

9. Reckanlage nach einem der vorhergehenden Ansprüche, **dadurch gekennzeichnet, dass** die Wärmeleiter (48) horizontal verlaufen oder in einem Winkel (α) zwischen 0° und 10° zur horizontalen Richtung (H) angeordnet sind, insbesondere wobei der Abschnitt des Wärmeleiters (48) im Abluftkanal (46) niedriger liegt als derjenige Abschnitt im Zuluftkanal (44).

10. Reckanlage nach einem der vorhergehenden Ansprüche, **dadurch gekennzeichnet, dass** die Zwischenräume (68) eine Luftströmungsrichtung (S_{A}) und eine Kondensatflussrichtung (F) aufweisen, wobei die Luftströmungsrichtung (S_{A}) und die Kondensatflussrichtung (F) parallel zueinander verlaufen, insbesondere wobei die Luftströmungsrichtung (S_{A}) und die Kondensatflussrichtung (F) vertikal verlaufen oder in einem Winkel (β) zwischen 0° und 10° zur vertikalen Richtung (V) angeordnet sind.

11. Reckanlage nach einem der Ansprüche 1 bis 9, **dadurch gekennzeichnet, dass** die Zwischenräume (68) eine Luftströmungsrichtung (S_{A}) und eine Kondensatflussrichtung (F) aufweisen, wobei die Luftströmungsrichtung (S_{A}) und die Kondensatflussrichtung (F) senkrecht zueinander verlaufen, insbesondere wobei die Luftströmungsrichtung (S_{A}) horizontal verläuft und/oder die Kondensatflussrichtung (F) vertikal oder in einem Winkel (β) zwischen 0° und 10° zur vertikalen Richtung (V) angeordnet ist.

12. Reckanlage nach einem der vorhergehenden Ansprüche, **dadurch gekennzeichnet, dass** die Wärmeleiter (48) Wärmerohre, insbesondere Heat Pipes sind.

13. Reckanlage nach einem der vorhergehenden Ansprüche, **dadurch gekennzeichnet, dass** der Ofen (26) eine Zuluftzufuhr (30) aufweist, die mit dem Zuluftkanal (44) des Wärmetauschers (34) fluidisch verbunden ist, und/oder dass der Ofen (26) eine Abluftabfuhr (32) aufweist, die mit dem Abluftkanal (46) des Wärmetauschers (34) fluidisch verbunden ist.

14. Reckanlage nach einem der vorhergehenden Ansprüche, **dadurch gekennzeichnet, dass** das Wärmerückgewinnungssystem (28) ein Heizregister (40) aufweist, insbesondere wobei das Heizregister (40) fluidisch zwischen dem Zuluftkanal (44) des Wärmetauschers (34) und der Zuluftzufuhr (30) des Ofens (26) angeordnet ist.

15. Folienherstellungsanlage mit wenigstens einer Reckanlage (15) nach einem der vorhergehenden Ansprüche sowie einer weiteren Reckanlage (15), einer Extrusionsanlage (12), einer Gießwalzenanlage (14), einer Zugrollenanlage (20) und/oder einer Wickleranlage (22).
